# EUROPÄISCHE PATENTSCHRIFT

(11) **EP 0 664 355 B1**
(45) Veröffentlichungstag und Bekanntmachung des Hinweises auf die Patenterteilung: **23.09.1998**
(21) Anmeldenummer: 95100924.0
(22) Anmeldetag: 24.01.1995
(51) Int. Cl.: D06N 3/04, C08L 29/14, C08K 5/00, C08K 3/00

(54) **Boden- oder Wandbelag und Verfahren zu dessen Herstellung**
Floor or wall covering and process for its manufacture
Revêtement de sol ou muraux et son procédé de fabrication

(30) Priorität: 25.01.1994 DE 4402077
(43) Veröffentlichungstag der Anmeldung: 26.07.1995
(73) Patentinhaber: Dunlop TECH GmbH, 63450 Hanau (DE)
(72) Erfinder: Körner, Hans-Theodor, D-63517 Rodenbach (DE); Seibert, Walter, D-63486 Bruchköbel (DE); Günther, Martin, D-63579 Freigericht-Neuses (DE)
(74) Vertreter: Manitz, Finsterwald & Partner

(56) Entgegenhaltungen:
- EP-A- 0 471 658
- DE-A- 4 202 948
- US-A- 2 552 600

## Beschreibung

Die Erfindung betrifft einen Bodenbelag aus Kunststoff, Füllstoffen und weiteren Hilfsstoffen sowie ein Verfahren zur Herstellung dieses Bodenbelags.

Neben den bekannten PVC-Bodenbelägen sind auch bereits Bodenbeläge unter Verwendung von Polyvinylbutyral, das heißt halogenfreie Bodenbeläge vorgeschlagen worden.

Polyvinylbutyral (PVB) ist ein thermoplastisches Kunstharz, das chemisch nur aus den Elementen Kohlenstoff, Sauerstoff und Wasserstoff besteht und als Bindemittel in Bodenbelägen grundsätzlich gut geeignet ist. Problematisch ist jedoch der hohe Preis von PVB, der bezüglich des preisgünstigen PVC-Materials etwa um den Faktor 10 höher liegt, so daß allein aus wirtschaftlichen Gründen die Verwendung von PVB für Fußbodenbeläge im Regelfall nicht in Betracht kommt.

Um die Vorteile des PVB-Materials im Zusammenhang mit Fußbodenbelägen dennoch nützen zu können, wurde bereits vorgeschlagen, recycliertes PVB zur Herstellung von Bodenbelägen und Wandplatten zu verwenden.

Aus der EP-A-0 471 658 ist die Verwendung von recycliertem, plastifiziertem Polyvinylbutyralharz als Rohmaterialkomponente bei der Herstellung von Fußbodenbelägen bekannt, wobei dem recyclierten, weichmacherhaltigen PVB noch andere kompatible Harze beigemischt werden können, jedoch das recyclierte PVB stets den Hauptbestandteil bildet. Bei dem recyclierten PVB handelt es sich vorwiegend um Zwischenschichtmaterial, wie es in Sicherheitsgläsern für Fenster in Gebäuden und Windschutzscheiben in Autos verwendet wird. Bei der Recyclierung des Glasanteils werden die Scheiben durch Zerstoßen und Mahlen in kleinere Glaspartikel zerlegt, die durch Sieben von den größeren PVB-Kunststoffanteilen getrennt werden, welche dann für den Einsatz im Zusammenhang mit Bodenbelägen wiederverwendbar sind.

Aus der DE-A-42 02 948 ist ein Verfahren zur Verwendung von recycliertem, weichmacherhaltigem Polyvinylbutyral als Rohstoff zur Herstellung von Bodenbelägen bekannt, welche übliche Füllstoffe und Hilfsstoffe enthalten und die Masse einen Anteil von 5 % bis 20 % Polyacrylat aufweist. Die nach diesem bekannten Verfahren gefertigten Bodenbeläge bestehen beispielsweise aus 30 % bis 60 % recycliertem PVB, das etwa 30 % bis 50 % Weichmacher enthält, aus 5 % bis 20 % Polyacrylat sowie 20 % bis 60 % Füllstoffen.

Nachteilig bei den bekannten Bodenbelägen, die unter Verwendung von recycliertem PVB hergestellt sind, ist vor allem, daß die recyclierten PVB-Folien bestimmte Weichmacher enthalten, aufgrund derer es beim fertigen Belag zu Weichmachermigrationen, das heißt zu einem Ausschwitzen von Weichmachern kommt, was zu Verschmutzungsproblemen aufgrund von anhaftenden Schmutzteilchen und zu einer häufig nicht ausreichenden Verklebung des Belages auf dem Untergrund führt. Außerdem kommt es bei längerer Lagerung zu einem äußerst unerwünschten Zusammenhaften der Belagplatten. Schließlich ist bei Verwendung derartiger bekannter Beläge störend, daß aufgrund des enthaltenen Weichmachers unangenehme Geruchseffekte auftreten.

Aufgabe der Erfindung ist es, einen wirtschaftlich herzustellenden, halogenfreien Boden- oder Wandbelag zu schaffen, der hinsichtlich seiner physikalischen Eigenschaften zumindest im wesentlichen den bekannten PVC-Belägen entspricht, insbesondere eine hohe Kratzfestigkeit und gute Verschleißwerte aufweist sowie eine problemlose Verklebung ermöglicht.

Gelöst wird diese Aufgabe nach der Erfindung ausgehend von einem Kunststoff, Füllstoffe und weitere Hilfsstoffe enthaltenden Belag im wesentlichen dadurch, daß der Kunststoffanteil 8 bis 25 Gew.-%, insbesondere 10 bis 14 Gew.-% beträgt und zumindest überwiegend aus nicht typengerechtem Polyvinylbutyral (NT-PVB) besteht, wo= bei NT-PVB weichmacherfreies Material von Fehlchargen und/oder aus der Abreinigung von Acetalisier-Reaktoren, Kaskaden und/oder Absetzgruben ist und eine Viskosität nicht unter 50 mPa s (gemessen als 5%ige n-Butanol-Lösung / 20°C nach Höppler, DIN 53015) aufweist, daß zusätzlich ein auf den PVB-Anteil bezogener Weichmacheranteil im Bereich von 20 bis 70 Gew.-% und insbesodere von 30 bis 60 Gew.-% vorgesehen ist und daß der Rest der Mischung aus Füll- und Hilfsstoffen besteht.

Durch die überwiegende Verwendung von nicht typengerechtem, keine Weichmacher enthaltendem Polyvinylbutyral gelingt es, einerseits die Gestehungskosten gering zu halten und andererseits diejenigen Nachteile zu vermeiden, die bei der bekannten Verwendung von recyclierten PVB-Folien in Kauf genommen werden mußten, nämlich die störenden Weichmachermigrationen und die damit verbundenen Verschmutzungs- und Geruchsprobleme.

Durch Verwendung von weichmacherfreiem PVB und die Beigabe zusätzlicher Weichmacher, insbesondere die Beigabe von Dioctylphthalat DOP als Weichmacher kann der störende Effekt der Weichmachermigration ausgeschaltet werden.

Grundsätzlich ist es möglich, das nicht typengerechte Polyvinylbutyral gegebenenfalls mit recycliertem PVB- und / oder PVB-la-Ware zu verstrecken, aber die entsprechenden Anteile werden dabei stets so gewählt, daß zum einen die im recycliertem PVB enthaltenen Weichmacher nicht störend in Erscheinung treten können und zum anderen keine inakzeptablen Erhöhungen der Gestehungskosten auftreten.

Als Füll- und Hilfsstoffe können bei der erfindungsgemäßen Herstellung von Bodenbelägen herkömmliche Stoffe, wie Kreide, Stearinsäure, anorganische Flammschutzmittel, Pigmente und dergleichen Verwendung finden. Um den Belag antistatisch bzw. latent leitfähig zu machen, können die üblichen, auch für PVC verwendeten Antistatika zum Einsatz kommen.

Zum Zwecke einer positiven Beeinflussung der Maßstabilität und der Festigkeitswerte erfolgt vorzugsweise eine leichte Vernetzung unter Verwendung von Vernetzern für PVB wie Melamin-, Epoxyd- und Phenolharze sowie Dialdehyden.

Weitere vorteilhafte Merkmale und Ausgestaltungen des erfindungsgemäßen Belags sind in den Ansprüchen 2 bis 8 angegeben.

Ein vorteilhaftes Verfahren zur Herstellung eines erfindungsgemäßen Belags kennzeichnet sich dadurch,
daß die Mischung zur Bahnbildung einem Walzwerk und anschließend in Bahnform einer Kalanderanordnung zur Einstellung der Enddicke und zur Bildung des Oberflächenfinishs zugeführt wird, und
daß die Bahn nach dem Verlassen der Kalanderanordnung durch Kontakt- und / oder Luftkühlung abgekühlt wird und anschließend ein Ausstanzen der Platten erfolgt.

Bei der Durchführung dieses Verfahrens wird mit hohem Füllstoffanteil gearbeitet, das heißt als Hauptbestandteil wird im Regelfall natürliche Kreide verwendet. Dies führt zur Produktion von Plattenware mit guten, der bekannten PVC-Ware vergleichbaren physikalischen Eigenschaften, wobei der PVB-Anteil relativ gering ist und als Folge davon sowie aufgrund der Verwendung von nicht typengerechtem PVB die geforderte Wirtschaftlichkeit gewährleistet werden kann.

Von wesentlicher Bedeutung im Zusammenhang mit der Durchführung des erfindungsgemäßen Verfahrens ist auch, daß ein gezielt durchgeführtes Heruntertempern des Belags erfolgt, um die geforderte Maßhaltigkeit sicherzustellen. Dazu wird ein Abkühlen des die geforderte Enddicke und das gewünschte Oberflächenfinish aufweisenden Belags durch Stahlkühlbänder, Rollenbahnen und / oder Förderbänder mit Luftkühlung vorgenommen, und zwar derart, daß in einer ersten Kühlphase eine langsame, die Maßhaltigkeit der Bahn gewährleistende Abkühlung und in einer zweiten Phase eine wesentlich schnellere Abkühlung durchgeführt wird.

Auf diese Weise läßt sich auch eine Optimierung der gesamten Kühlbahnlänge erzielen, an deren Ende ein direktes Stanzen im Produktionsfluß mit anschließendem Verpacken der Plattenware erfolgt. Es wird somit ein sofortiges Endprodukt hergestellt und eine bei herkömmlichen Verfahren übliche Nachbehandlung vermieden.

Weitere Besonderheiten des erfindungsgemäßen Verfahrens sind in den Ansprüchen 10 bis 14 angegeben.

Die Erfindung wird nachfolgend anhand eines Verfahrensbeispiels ergänzend erläutert.

Bei dem nicht typengerechten Polyvinylbutyral, wie es im Rahmen der Erfindung vorwiegend verwendet wird, handelt es sich beispielsweise um PVB's für die Folien- und Lackindustrie, wobei verschiedene nicht typengerechte PVB's anfallen, wie zum Beispiel durch Fehlchargen in der Folien- bzw. Lackbutyralproduktion, die verschiedene Viskositäten besitzen können, in sich aber homogen sind. Es können aber auch nichthomogene Chargen mit Viskositätsschwankungen auftreten, die ebenfalls im Rahmen der Erfindung verarbeitbar sind. Weiterhin kann NT-Ware beim Abreinigen von Acetalisier-Reaktoren erhalten werden, die in bestimmten Abständen von ankrustendem Material befreit werden, das dann aus mehreren Reaktoren gesammelt wird und damit auch nicht homogen ist. Schließlich kann auch NT-Ware von relativ schlechter Qualität im Rahmen der Erfindung verwertet werden, wie es beispielsweise in Absetzgruben und Kaskaden anfällt, über die die Spülwässer des Betriebs ins Abwasserrohrnetz gelangen. Verunreinigungen durch Fremdchemikalien treten dabei nicht auf, da die entsprechenden Absetzbecken nur für den PVB-Produktionsbereich zuständig sind und keine Sammelbecken für Abwassergemische darstellen. Eine geringe Schmutzbelastung derartiger NT-Ware stört die Verarbeitung im Rahmen der Erfindung nicht, wesentlich ist nur, daß keine Fremdchemikalien enthalten sind.

Die Aufbereitung der NT-Ware ist unproblematisch und erfordert keinen wesentlichen Aufwand. Im Falle der Verwendung des in Acetalisier-Reaktoren ankrustenden Materials werden diese Materialverkrustungen beim Reinigungsvorgang mittels eines Siebes zurückgehalten, anschließend im feuchten Zustand gemahlen, und das Mahlgut wird dann mit Kalk neutralisiert und getrocknet. Das in Absetzgruppen anfallende Material wird einfach entwässert, anschließend mit Kalk neutralisiert und ebenfalls getrocknet.

Bei der erfindungsgemäßen Verarbeitung von NT-Ware hat sich gezeigt, daß die Verarbeitung von höher viskosem PVB besser ist als die Verarbeitung von PVB mit niedrigerer Viskosität, das heißt vorzugsweise werden im Rahmen der Erfindung hochviskose Typen von NT-Ware bevorzugt. Die Viskosität der PVB-NT-Ware liegt nicht unter 50 mPa s (gemessen als 5%ige n-Butanol-Lösung / 20°C, nach Höppler, DIN 53015), da auf diese Weise auch eventuell störende Anhafttendenzen ausgeschaltet werden können.

Ferner ist wesentlich, daß die Restfeuchte von PVB-NT-Ware möglichst gering ist und einen Wert von 1,5 % nicht übersteigt, um eine sonst mögliche Verschlechterung der Oberflächenqualität durch Blasenbildung mit Sicherheit auszuschalten.

Bei einem bevorzugten Verfahren zur Herstellung von Bodenoder Wandplatten nach der Erfindung werden die Rohstoffe in einem Innenmischer bzw. Kneter intensiv miteinander vermischt. Von diesem Innenmischer gelangt das Material zu einem Walzwerk, wo eine Homogenisierung erfolgt und eine Zugabe von Kaltgranulat für das Oberflächendesign zwecks Erzielung einer Marmorierung erfolgen kann. Das Abziehen des gebildeten Felles bzw. der gebildeten Bahn vom Walzwerk erfolgt durch einen Rakel, worauf die Bahn zusammengelegt und auf Fertigungsbreite geteilt wird. Die so vorbereiteten Bahnen werden einem vorzugsweise aus zwei Walzen bestehenden ersten Kalander zugeführt, der den bis hierher chargenweisen Ablauf in einen kontinuierlichen Vorgang umwandelt und die Bahn vorverformt. In einem bezüglich des ersten Kalanders beabstandeten zweiten Kalander wird die Bahn auf die geforderte Enddicke und die Oberfläche in ihren Endzustand gebracht.

Anschließend erfolgt ein gezieltes Heruntertempern der fertigen Bahn in zwei Phasen mit unterschiedlichen Temperaturgradienten, nämlich in einer ersten Phase relativ langsamer Abkühlung bis zum Erreichen eines Temperaturwertes, ab dem beim weiteren, schneller vor sich gehenden Abkühlvorgang keine Maßhaltigkeitsprobleme mehr entstehen.

Das Heruntertempern erfolgt über eine Kontaktkühlung, zum Beispiel durch Stahlkühlbänder, Rollenbahnen und Förderbänder mit Luftkühlung, da auf diese Weise ein zu schnelles Reagieren des PVB-Materials und störende Schrumpfungseffekte vermieden werden können. Die Möglichkeit der Erhöhung der Abkühlrate nach Erreichen des Temperaturwertes, ab dem keine Maßhaltigkeitsprobleme mehr auftreten, gestattet es, kürzere Transportstrecken bis zur Stanzstation vorzusehen, was sich sowohl hinsichtlich der erforderlichen maschinellen Ausrüstung als auch des Raumbedarfs günstig auswirkt.

Das direkte Stanzen im Produktionsfluß erfolgt zweckmäßigerweise bei einer Bahntemperatur von 20°C bis 30°C.

Bei einem praktischen Beispiel einer Plattenfertigung nach der Erfindung lag die Mischungstemperatur im Bereich von 180°C bis 200°C, und im Walzwerk lagen die Walzentemperaturen im Bereich von 130°C bis 160°C.

Im ersten Kalander, der eine Spalteinstellung von 2,8 mm bis 3,5 mm hatte, betrug die Temperatur der Oberwalze 95°C bis 105°C und die Temperatur der Unterwalze 60°C bis 70°C.

Im zweiten Kalander, dessen Spalteinstellung der gewünschten Enddicke von 2 mm entsprach, waren die Walzentemperatur entsprechend dem ersten Kalander gewählt.

Bei einer Produktionsgeschwindigkeit von 25 m/min wurden Platten einwandfreier Qualität erhalten, deren Eigenschaften dem Anforderungsprofil nach DIN 16950 entsprachen, das heißt es ist im Rahmen der Erfindung ohne weiteres möglich, halogenfreie Wand- und Bodenplatten herzustellen, die hinsichtlich ihrer physikalischen Eigenschaften mit den herkömmlichen PVC-Platten vergleichbar sind und auch auf wirtschaftliche Weise gefertigt werden können.

## Patentansprüche

1. Boden- oder Wandbelag aus Kunststoff, Füllstoffen und weiteren Hilfsstoffen, dadurch gekennzeichnet,
daß der Kunststoffanteil 8 bis 25 Gewichts-%, insbe= sondere 10 bis 14 Gewichts-% beträgt und zumindest über= wiegend aus nicht typengerechtem Polyvinylbutyral (NT-PVB) besteht, wobei NT-PVB weichmacherfreies Material von Fehl= chargen und/oder aus der Abreinigung von Acetalisier-Reak= toren, Kaskaden und/oder Absetzgruben ist und eine Visko= sität nicht unter 50 mPa s (gemessen als 5 %ige n-Butanol-Lösung / 20°C nach Höppler, DIN 53015) aufweist,
daß zusätzlich ein auf den PVB-Anteil bezogener Weich= macheranteil im Bereich von 20 bis 70 Gewichts-% und insbesondere von 30 bis 60 Gewichts-% vorgesehen ist, und
daß der Rest der Mischung aus Füll- und Hilfsstoffen besteht.

2. Belag nach Anspruch 1, dadurch gekennzeichnet,
daß der Anteil an NT-PVB 12 Gewichts-%, der Weich= macheranteil 5 Gewichts-% und der Pigmentanteil 2 Gewichts-% beträgt, und daß der Restanteil im wesentlichen aus Füllstoffen, insbesondere aus Kreide besteht.

3. Belag nach Anspruch 1 oder 2, dadurch gekennzeichnet, daß als Weichmacher, Phthalat-Weichmacher, vorzugsweise Dioctylphthalat DOP (auch Di-2-ethylhexyl-phthalat DEHP genannt) verwendet ist.

4. Belag nach einem der vorhergehenden Ansprüche, dadurch gekennzeichnet,
daß der überwiegende Anteil der Füllstoffe aus Kreide be= steht.

5. Belag nach einem der vorhergehenden Ansprüche, dadurch gekennzeichnet,
daß die Mischung einen Vernetzer enthält, dessen prozen= tualer Gewichtsanteil bis zu 10 % bezogen auf den PVB-An= teil beträgt, wobei als Vernetzer von PVB insbesondere Melamin-, Epoxyd-, Phenol- und / oder Harnstoffharze sowie Dialdehyden verwendet sind.

6. Belag nach einem der vorhergehenden Ansprüche, dadurch gekennzeichnet,
daß die Restfeuchte des PVB-Anteils weniger als 1,5 % beträgt.

7. Belag nach einem der vorhergehenden Ansprüche, dadurch gekennzeichnet,
daß das NT-PVB mit recycliertem, weichmacherhaltigen PVB, insbesondere PVB-Recycling-Folien, verstreckt und der dazu verwendete Anteil so gering gewählt ist, daß keine Weichmachermigration auftritt.

8. Belag nach einem der vorhergehenden Ansprüche, dadurch gekennzeichnet,
daß das NT-PVB Material aus der Folien- bzw. Lackbutyral= produktion ist, wobei vorzugsweise das NT-PVB aus ver= schiedenen Chargen von zumindest zum Teil unterschiedli= cher Viskosität zusammengesetzt ist.

9. Verfahren zur Herstellung eines Boden- oder Wandbelags nach einem oder mehreren der vorhergehenden Ansprüche,
**dadurch gekennzeichnet,**
daß die Rohstoffe vorzugsweise in einem Kneter in einem Temperaturbereich von etwa 150°C bis 200°C gemischt werden,
daß die Mischung zur Bahnbildung einem Walzwerk und anschließend in Bahnform einer Kalanderanordnung zur Einstellung der Enddicke und zur Bildung des Oberflächenfinishs zugeführt wird, und
daß die Bahn nach dem Verlassen der Kalanderanordnung durch Kontakt- und / oder Luftkühlung abgekühlt wird und anschließend ein Ausstanzen der Platten erfolgt.

10. Verfahren nach Anspruch 9,
**dadurch gekennzeichnet,**
daß der Abkühlvorgang aus einer ersten Phase und einer zweiten Phase besteht, wobei in der ersten Phase eine langsame, die Maßhaltigkeit der Bahn gewährleistende Abkühlung und in der zweiten Phase eine wesentlich schnellere Abkühlung erfolgt, wobei in der ersten Phase insbesondere eine Abkühlung der Bahn auf etwa 50°C bis 80°C erfolgt.

11. Verfahren nach Anspruch 9,
**dadurch gekennzeichnet,**
daß die Kalanderanordnung von einem ersten und einem dazu beabstandeten zweiten Kalander gebildet wird, wobei die Temperatur des zweiten Kalanders im Bereich von etwa 90°C bis 120°C gewählt wird.

12. Verfahren nach einem der Ansprüche 9 bis 11,
**dadurch gekennzeichnet,**
daß das Ausstanzen der Platten bei einer Bahntemperatur von etwa 20°C bis 30°C erfolgt.

13. Verfahren nach einem der Ansprüche 9 bis 12,
**dadurch gekennzeichnet,**
daß in dem auf den Kneter folgenden Walzwerk eine Zugabe von Kaltgranulat für das Oberflächendesign erfolgt.

14. Verfahren nach einem der Ansprüche 9 bis 13,
**dadurch gekennzeichnet,**
daß vor dem ersten Kalander ein Zusammenlegen der vom Walzwerk gebildeten Bahn und ein Teilen auf Fertigungsbreite erfolgt und durch das aufeinanderfolgende Zuführen der geteilten Bahnen zum Kalander ein Übergang vom chargenweisen Ablauf in einen kontinuierlichen Vorgang erfolgt.

## Claims

1. Floor or wall covering of plastic, fillers and further process materials, characterized in that the plastic component amounts to 8 to 25 % by weight, in particular 10 to 14 % by weight and consists at least predominantly of an atypical poly(vinyl butylral) (NT-PVB), wherein NT-PVB is softener-free material from faulty batches and/or from the cleaning of acetalisation reactors, from cascades and/or from settling pits and has a viscosity not under 50 mPa s (measured as a 5 % n-butanol solution / 20°C in accordance with Höppler, DIN53015, in that a softener component in the range from 20 to 70 % by weight, and in particular from 30 to 60 % by weight, related to the PVB component, is provided, and in that the remainder of the mixture consists of filler materials and process materials.

2. Covering in accordance with claim 1, characterized in that the proportion of NT-PVB amounts to 12 % by weight, the proportion of softener to 5 % by weight and the proportion of pigment to 2 % by weight, and in that the remainder consists essentially of filler materials, in particular of chalk.

3. Covering in accordance with claim 1 or claim 2, characterized in that phthalate softeners, preferably dioctyl phthalate DOP (also termed Di-2-ethylhexyl-phthalate DEHP) is used as a softener.

4. Covering in accordance with one of the preceding claims, characterized in that the predominant proportion of the filler materials consists of chalk.

5. Covering in accordance with one of the preceding claims, characterized in that the mixture contains a cross linking agent, the percentage of which by weight amounts to up to 10 % related to the PVB component, wherein melamine, epoxy, phenolic and/or urea resins and also dialdehydes are used as cross-linking agents of PVB.

6. Covering in accordance with one of the preceding claims, characterized in that the residual moisture content of the PVB component amounts to less than 1.5 %.

7. Covering in accordance with one of the preceding claims, characterized in that the NT-PVB is extended with recycled, softener-containing PVB, in particular recycled PVB foils, and in that the proportion used for this purpose is selected to be so small that no softener migration arises.

8. Covering in accordance with one of the preceding claims, characterized in that the NT-PVB material stems from the production of foils or butyral paints, with the NT-PVB preferably being put together from different batches of at least partly differing viscosity.

9. Method of manufacturing a floor or wall covering in accordance with one or more of the preceding claims, characterized in that the raw materials are mixed, preferably in a kneader, in a temperature range of approximately 150°C to 200°C, in that the mixture is supplied for web formation to a rolling mill and subsequently in web form to a calendar arrangement for the adjustment of the final thickness and for the formation of the surface finish, and in that the web is cooled by contact cooling and/or air cooling after leaving the calendar arrangement, and a stamping out of the panels subsequently takes place.

10. Method in accordance with claim 9, characterized in that the cooling procedure consists of a first phase and a second phase, with a slow cooling which ensures the dimensional accuracy of the web taking place in the first phase, and with a substantially more rapid cooling taking place in the second phase, with cooling of the web to about 50°C to 80°C taking place in the first phase in particular.

11. Method in accordance with claim 9, characterized in that the calendar arrangement is formed by a first calendar and a second calendar spaced therefrom, with the temperature of the second calendar being selected in the range from about 90°C to 120°C.

12. Method in accordance with one of the claims 9 to 11, characterized in that the stamping out of the panels takes place at a web temperature of approximately 20°C to 30°C.

13. Method in accordance with one of the claims 9 to 12, characterized in that an addition of cold granulate for the surface design takes place in the rolling mill following the kneader.

14. Method in accordance with one of the claims 9 to 13, characterized in that prior to the first calendar the web formed by the rolling mill is folded and a division into the finished width takes place, and in that a transition from a batch-wise sequence into a continuous procedure takes place through the sequential supply of the divided webs to the calendar.

## Revendications

1. Revêtement de sol ou mural fait de matière plastique, de matières de charge et d'autres adjuvants, caractérisé
en ce que la proportion de matière plastique va de 8 à 25 % en poids, notamment de 10 à 14 % en poids, et se compose au moins majoritairement de polyvinylbutyral atypique (PVB-NT), ledit PVB-NT étant une matière exempte de plastifiant provenant de lots défectueux et/ou du nettoyage de réacteurs d'acétalisation, d'appareils en cascade et/ou de fosses de décantation et présentant une viscosité non inférieure à 50 mPa·s (mesurée sur une solution n-butanolique à 5 % à 20 °C suivant Höppler, DIN 53015),
en ce qu'il est prévu en plus une proportion de plastifiant dans la plage de 20 à 70 % en poids, et notamment de 30 à 60 % en poids, ramenée à la proportion de PVB, et
en ce que le reste du mélange est constitué par des matières de charge et des adjuvants.

2. Revêtement selon la revendication 1, caractérisé
en ce que la proportion de PVB-NT est de 12 % en poids, la proportion de plastifiant de 5 % en poids et la proportion de pigment de 2 % en poids, et en ce que la proportion restante est constituée essentiellement par des matières de charge, en particulier par de la craie.

3. Revêtement selon la revendication 1 ou la revendication 2, caractérisé en ce que
le plastifiant utilisé est un plastifiant à base de phtalate, de préférence le phtalate de dioctyle, DOP (également désigné par phtalate de di-2-éthylhexyle, DEHP).

4. Revêtement selon l'une quelconque des revendications précédentes, caractérisé en ce que
la majeure partie des matières de charge est constituée par de la craie.

5. Revêtement selon l'une quelconque des revendications précédentes, caractérisé en ce que
le mélange contient un agent de réticulation dans une proportion allant jusqu'à 10 % en poids, ramenée à la proportion de PVB, les agents de réticulation du PVB étant des résines à base de mélamine, d'époxyde, de phénol et/ou d'urée ainsi que des dialdéhydes.

6. Revêtement selon l'une quelconque des revendications précédentes, caractérisé en ce que l'humidité résiduelle de la proportion de PVB est inférieure à 1,5 %.

7. Revêtement selon l'une quelconque des revendications précédentes, caractérisé en ce que
le PVB-NT est étiré avec du PVB recyclé contenant du plastifiant, notamment des feuilles de PVB recyclé, et la proportion utilisée à cette fin est choisie suffisamment faible pour qu'il ne se produise aucune migration de plastifiant.

8. Revêtement selon l'une quelconque des revendications précédentes, caractérisé en ce que
le PVB-NT est un matériau provenant de la production de butyral pour feuilles ou pour laques, le PVB-NT étant de préférence composé de différents lots ayant au moins en partie des viscosités différentes.

9. Procédé de fabrication d'un revêtement de sol ou mural selon l'une ou plusieurs des revendications précédentes, caractérisé
en ce que les matières premières sont de préférence mélangées dans un malaxeur à l'intérieur d'une plage de températures allant de 150 °C à 250 °C environ,
en ce que l'on fait passer le mélange dans un laminoir afin de former une bande continue puis on fait passer ladite bande continue dans un dispositif de calandrage afin d'ajuster l'épaisseur finale et d'obtenir la finition de surface, et
en ce que la bande continue est refroidie à la sortie du dispositif de calandrage par refroidissement par contact et/ou par air et ensuite un découpage en plaques est effectué.

10. Procédé selon la revendication 9, caractérisé en ce que
l'opération de refroidissement comprend une première phase et une deuxième phase, un refroidissement lent garantissant la stabilité dimensionnelle de la bande continue étant réalisé dans la première phase et un refroidissement sensiblement plus rapide dans la deuxième phase, le refroidissement s'effectuant dans la première phase en particulier à une température de 50 °C à 80 °C.

11. Procédé selon la revendication 9, caractérisé en ce que
le dispositif de calandrage est formé par une première calandre et une deuxième calandre espacée de la première, la température de la deuxième calandre étant choisie dans la plage de 90 °C à 120 °C environ.

12. Procédé selon l'une quelconque des revendications 9 à 11, caractérisé en ce que
la découpe des plaques s'effectue à une température de la bande continue comprise entre 20 °C et 30 °C environ.

13. Procédé selon l'une quelconque des revendications 9 à 12, caractérisé en ce que
l'on ajoute, dans le laminoir en aval du malaxeur, du granulé froid pour le motif de surface.

14. Procédé selon l'une quelconque des revendications 9 à 13, caractérisé en ce que,
en amont de la première calandre, on effectue un pliage de la bande continue formée par le laminoir et un refendage à la largeur de fabrication et en ce que, en amenant les bandes continues refendues les unes à la suite des autres dans la calandre, on réalise une transition d'un processus par lots à une opération en continu.
